# EUROPÄISCHE PATENTSCHRIFT

(11) **EP 1 277 979 B1**
(45) Veröffentlichungstag und Bekanntmachung des Hinweises auf die Patenterteilung: **27.04.2005**
(21) Anmeldenummer: 02010802.3
(22) Anmeldetag: 15.05.2002
(51) Int. Cl.: F16D 3/32

(54) **Zentriertes Doppelkreuzgelenk**
Centered double universal joint
Joint universel double centré

(30) Priorität: 20.07.2001 DE 10135346
(43) Veröffentlichungstag der Anmeldung: 22.01.2003
(73) Patentinhaber: GKN Walterscheid GmbH, 53797 Lohmar (DE)
(72) Erfinder: Herchenbach, Paul, 53809 Ruppichteroth (DE); Hector, Martin, Dipl.-Ing., 53721 Siegburg (DE); Wilks, Eberhard, Dipl.-Ing., 56307 Daufenbach (DE)
(74) Vertreter: Harwardt, Günther, Dipl.-Ing.

(56) Entgegenhaltungen:
- JP-A- 406 185 535
- US-A- 4 257 243
- US-A- 4 261 186
- US-A- 4 781 662

## Beschreibung

Die Erfindung betrifft ein zentriertes Doppelkreuzgelenk, insbesondere zum Antreiben von oder für Antriebe in landwirtschaftlichen Geräten und Traktoren, umfassend
- eine erste äußere Gelenkgabel mit ersten äußeren Gabelarmen,
- eine erste Brücke, mittels der die ersten äußeren Gabelarme miteinander verbunden sind,
- erste Zentriermittel, die der ersten Brücke zugeordnet sind,
- eine erste innere Gelenkgabel mit ersten inneren Gabelarmen,
- ein erstes Zapfenkreuz, welches die ersten äußeren Gabelarme mittels Wälzlager mit den ersten inneren Gabelarmen gelenkig verbindet und welches eine erste Schmiermittelversorgung zum Schmieren der Wälzlager aufweist,
- eine zweite äußere Gelenkgabel mit zweiten äußeren Gabelarmen,
- eine zweite Brücke, mittels der die zweiten äußeren Gabelarme miteinander verbunden sind,
- zweite Zentriermittel, die der zweiten Brücke zugeordnet sind,
- eine zweite innere Gelenkgabel mit zweiten inneren Gabelarmen,
- ein zweites Zapfenkreuz, welches die zweiten äußeren Gabelarme mittels Wälzlager mit den zweiten inneren Gabelarmen gelenkig verbindet und welches eine zweite Schmiermittelversorgung zum Schmieren der Wälzlager aufweist,
- eine Führungsscheibe mit einer Längsachse, mit einem ersten zentralen Zentrieransatz, der gelenkig mit den ersten Zentriermitteln der ersten äußeren Gelenkgabel verbunden ist, mit einem zweiten zentralen Zentrieransatz, der gelenkig mit den zweiten Zentriermitteln der zweiten äußeren Gelenkgäbel verbunden ist, und mit Führungsflächen, über die die Führungsscheibe in einer Ringausnehmung eines Gehäuses geführt ist, wobei die Ringausnehmung durch eine erste radial verlaufende kreisringförmige Dichtfläche und durch eine zweite radial verlaufende kreisringförmige Dichtfläche begrenzt ist, relativ zu denen die Führungsflächen der Führungsscheibe radial verschiebbar geführt sind und wobei die Ringausnehmung radial außen geschlossen und radial innen offen ist,
- wobei die erste innere Gelenkgabel und die zweite innere Gelenkgabel Teil des Gehäuses sind.

Dokument US-4 781 662-A offenbart ein gattungsgemäßes Doppelkreuzgelenk. In der DE 39 21 242 C1 ist ein solches zentriertes Doppelkreuzgelenk beschrieben, bei dem zwei äußere Gelenkgabeln ⱼeweils über ein Zapfenkreuz mit zwei inneren Gelenkgabeln, die Bestandteil eines Gehäuses sind, gelenkig verbunden sind. In dem Gehäuse ist eine Ringausnehmung gebildet, in welcher eine Führungsscheibe unter Zwischenschaltung von schwimmend angeordneten ringförmigen Führungsplatten radial verschiebbar gelagert ist. Die Führungsscheibe weist zentral einen Führungsansatz auf, der beidseitig von der Führungsscheibe vorsteht.

Die äußeren Gelenkgabeln, deren Gabelarme über eine Brücke miteinander verbunden sind, besitzen jeweils einen eine Kugelfläche aufweisenden Zapfenansatz, der in einer Bohrung des zentralen Führungsansatzes der Führungsscheibe schwenkbar gelagert ist. Die Zapfenkreuze weisen jeweils Schmierkanäle auf, mit denen Wälzlager geschmiert werden, die zum Lagern des Zapfenkreuzes in den Gabelarmen dienen. Die Schmierkanäle sind jeweils mit Schmiermittelführungen in den Zapfenansätzen verbunden, wobei sich diese in die Bohrung des zentralen Führungsansatzes der Führungsscheibe öffnen. In der Führungsscheibe ist zumindest ein radial verlaufender Schmiermittelkanal vorgesehen, der die Bohrung im zentralen Führungsansatz mit der Ringausnehmung verbindet. Somit lässt sich Schmiermittel ausgehend von einem Schmiernippel, der am Zapfenkreuz vorgesehen ist, in die Ringausnehmung befördern. Nachteilig ist jedoch, daß bei hohen Drehzahlen des Doppelkreuzgelenkes das Schmiermittel aufgrund der Fliehkräfte radial nach außen geschleudert wird und somit die Schmierung der Führungsscheibe und der Führungsplatten verschlechtert wird.

Die DE 28 02 572 C2 zeigt ebenfalls ein zentriertes Doppelkreuzgelenk, bei dem eine Führungsscheibe, die über Zentrieransätzen mit äußeren Gelenkgabeln gelenkig verbunden ist, in einer Ringausnehmung radial verschiebbar geführt ist. An dem Gehäuse ist ein Schmiernippel vorgesehen, der über einen Schmiermittelkanal direkt mit der Ringausnehmung verbunden ist. Die Wälzlager der Zapfenkreuze und die Ringausnehmung werden somit getrennt voneinander abgeschmiert. Auch hier wird das Schmiermittel aufgrund der Fliehkräfte radial nach außen gedrückt.

Die JP 406/85535 A offenbart ein zentriertes Doppelkreuzgelenk mit Schmiernuten.

Aufgabe der vorliegenden Erfindung ist es, ein zentriertes Doppelkreuzgelenk mit einer Führungsscheibe zu schaffen, bei dem die Schmierung der Führungsscheibe verbessert ist.

Gelöst wird diese Aufgabe erfindungsgemäß durch ein eingangs beschriebenes zentriertes Doppelkreuzgelenk mit
- einer ersten Schmiernut in der ersten Dichtfläche, die koaxial zur Längsachse der Führungsscheibe verläuft, nahe dem inneren Durchmesser der Ringausnehmung angeordnet ist und mit der ersten Schmiermittelversorgung des ersten Zapfenkreuzes verbunden ist, und
- einer zweiten Schmiernut in der zweiten Dichtfläche, die koaxial zur Längsachse der Führungsscheibe verläuft, nahe dem inneren Durchmesser der Ringausnehmung angeordnet ist und mit der zweiten Schmiermittelversorgung des zweiten Zapfenkreuzes verbunden ist.

Von Vorteil bei dieser Ausbildung ist, dass aufgrund der ersten Schmiernut und der zweiten Schmiernut, die jeweils in einer der Dichtflächen vorgesehen sind, die Dichtflächen unmittelbar geschmiert sind. Im Fall, dass die Führungsscheibe unmittelbar in der Ringausnehmung geführt ist und hierbei die Führungsflächen der Führungsscheibe in direkter Anlage zu den Dichtflächen der Ringausnehmung sind, wird Schmiermittel unmittelbar zwischen die Dichtflächen und die jeweilige Führungsfläche eingebracht. Da die Schmiernuten nahe dem inneren Durchmesser der Ringausnehmung angeordnet sind, werden bei einer radialen Verschiebung der Führungsscheibe die Führungsflächen über einen größtmöglichen Bereich geschmiert.

Vorzugsweise ist vorgesehen, daß beidseitig der Führungsscheibe ringförmige Führungsplatten in der Ringausnehmung angeordnet sind,
daß der Außendurchmesser der Führungsplatten größer als der innere Durchmesser der Ringausnehmung ist und kleiner als der größte Durchmesser der Ringausnehmung ist und
daß der Innendurchmesser der Führungsplatten größer ist als der äußere Durchmesser der Führungsansätze der Führungsscheibe und kleiner als der Außendurchmesser der Führungsscheibe ist.

Bei dieser Ausbildung wird über die Schmiernuten Schmiermittel direkt zwischen eine Schmiernut und eine Führungsfläche der jeweiligen Führungsplatte eingebracht.

Es kann vorgesehen sein, daß in dem Gehäuse eine erste Schmiermittelführung vorgesehen ist, die die erste Schmiermittelversorgung des ersten Zapfenkreuzes mit der ersten Schmiernut verbindet und daß in dem Gehäuse eine zweite Schmiermittelführung vorgesehen ist, die die zweite Schmiermittelversorgung des zweiten Zapfenkreuzes mit der zweiten Schmiernut verbindet.

Hierdurch wird vermieden, daß für die Schmiernuten und die Schmierung der Wälzlager der Zapfenkreuze separate Schmiernippel vorgesehen werden müssen. Die Schmiermittelführungen ermöglichen es, daß jeweils ein Zapfenkreuz und eine Schmiernut einen gemeinsamen Schmierverbund bilden. Durch das Abschmieren des Zapfenkreuzes wird gleichzeitig die Schmiernut mit Schmiermittel versorgt.

Um eine Schutzvorrichtung montieren zu können, die einen Berührungsschutz vor rotierenden Teilen des Doppelkreuzgelenkes darstellt, kann vorgesehen sein, daß das Gehäuse eine Umfangsnut zur drehenden Aufnahme einer Schutzvorrichtung aufweist, die koaxial zur Längsachse verläuft und die mit einer der Schmiernuten verbunden ist.

Durch die Verbindung der Umfangsnut mit einer der Schmiernuten ist die Umfangsnut ebenfalls in den Schmierverbund mit einbezogen.

Um eine exakte Steuerung der beiden das Doppelkreuzgelenk bildenden Kreuzgelenke zu ermöglichen und eine lange Lebensdauer zu gewährleisten, ist vorzusehen, daß in der Führungsscheibe eine zylindrische Lagerbohrung vorgesehen ist, die koaxial zur Längsachse durch den ersten Zentrieransatz und den zweiten Zentrieransatz führt,
daß die ersten Zentriermittel und die zweiten Zentriermittel jeweils einen Lagerzapfen aufweisen, welcher sich koaxial zu einer Drehachse der jeweiligen äußeren Gelenkgabel erstreckt,
daß je Lagerzapfen eine Lagerkugel in Form einer Kugelschicht mit einer Durchgangsbohrung, mit der sie auf dem Lagerzapfen aufsitzt und zumindest axial bezüglich der Drehachse gehalten ist und die eine kugelige Außenfläche aufweist, vorgesehen ist und
daß je Lagerkugel ein Lagerring, der die Außenfläche der Lagerkugel in einer entsprechenden hohlkugeligen Bohrung allseitig schwenkbeweglich lagert und eine zylindrische Außenfläche bildet, mit der dieser in der zylindrischen Lagerbohrung der Führungsscheibe axial verstellbar einsitzt, vorgesehen ist.

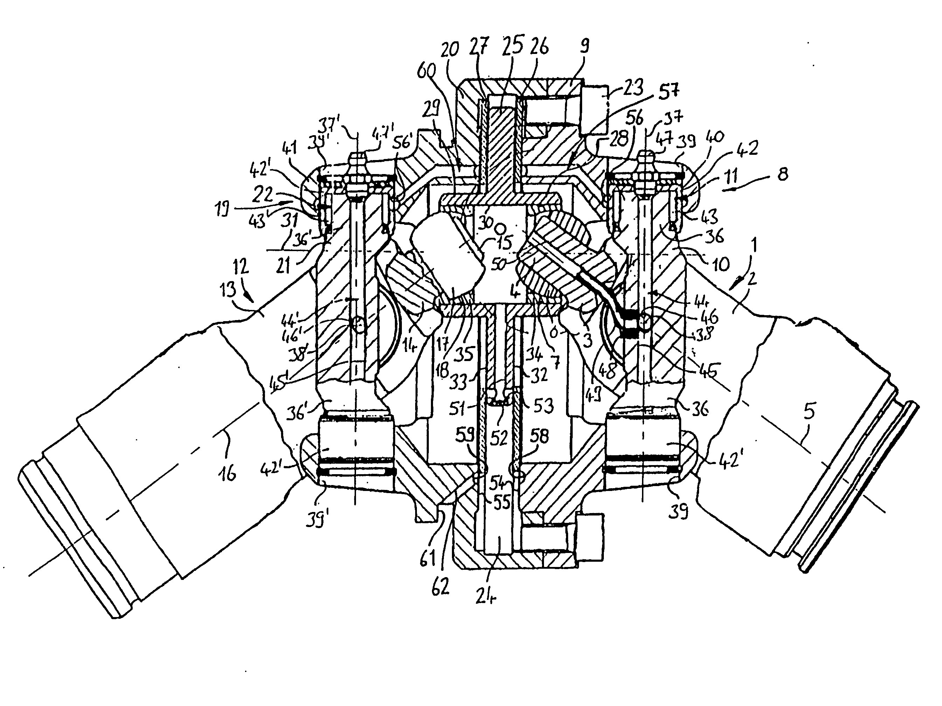

Ein bevorzugtes Ausführungsbeispiel wird anhand der Figur näher erläutert.

In der Figur ist ein erfindungsgemäßes Doppelkreuzgelenk teilweise geschnitten in einer Seitenansicht dargestellt. Das Doppelkreuzgelenk ist aus zwei einzelnen Kreuzgelenken aufgebaut, die über einen Zentriermechanismus gemäß der Erfindung miteinander so verbunden sind, daß beide Gelenke jeweils den halben Beugewinkel bei Abwinklung einer Antriebswelle zu einer Abtriebswelle übernehmen, um damit einen Gleichlauf zu gewährleisten. Beide Einzelgelenke sind im wesentlichen gleich aufgebaut.

Das Doppelkreuzgelenk umfasst eine erste äußere Gelenkgabel 1, die zwei erste äußere Gabelarme 2 besitzt, die durch eine erste Brücke 3 an ihren freien Enden miteinander verbunden sind. Die erste Brücke 3 trägt einen ersten Lagerzapfen 4 mit der ersten Achse 5. Dieser ist auf seiner Außenfläche zylindrisch ausgestaltet. Auf dem ersten Lagerzapfen 4 ist eine erste Lagerkugel 6, die die Form einer Kugelschicht aufweist, entlang der ersten Achse 5 unverschieblich gehalten. Die kugelige Außenfläche der ersten Lagerkugel 6 ist mit 7 bezeichnet. Die erste äußere Gelenkgabel 1 ist über ein erstes Zapfenkreuz 10 mittels Wälzlager 11 mit der ersten inneren Gelenkgabel 8 gelenkig verbunden. Die erste innere Gelenkgabel 8 ist mit ihren beiden Gabelarmen einstückig mit einem ersten Lagergehäuseabschnitt 9 ausgebildet.

Das zweite Gelenk umfasst eine zweite äußere Gelenkgabel 12, die zwei zweite äußere Gabelarme 13 aufweist, von denen ebenfalls nur ein Gabelarm sichtbar ist. Die beiden zweiten Gabelarme 13 sind über eine zweite Brücke 14 miteinander verbunden. Diese zweite Brücke 14 trägt einen zweiten Lagerzapfen 15, der eine zylindrische Außenfläche aufweist und auf der zweiten Achse 16 zentriert ist. Auf dem zweiten Lagerzapfen 15 ist eine zweite Lagerkugel 17 axial entlang der zweiten Achse 16 unverschieblich gehalten. Sie besitzt eine kugelige Außenfläche 18. Die zweite äußere Gelenkgabel 12 ist über ein zweites Zapfenkreuz 21 mit den Gabelarmen 13 der zweiten inneren Gelenkgabel 19 mittels Wälzlager gelenkig verbunden, wobei diese ebenfalls einstückig mit einem zweiten Lagergehäuseabschnitt 20 ausgebildet sind.

Der erste Lagergehäuseabschnitt 9 und der zweite Lagergehäuseabschnitt 20 sind durch Schrauben 23 lösbar miteinander verbunden. Die beiden Lagergehäuseabschnitte 9, 20 bilden zusammen eine radial außen geschlossene und radial innen offene Ringausnehmung 24, in welcher eine Führungsscheibe 25 zusammen mit einer ersten Führungsplatte 26 und einer zweiten Führungsplatte 27, die beidseitig der Führungsscheibe 25 angeordnet sind, radial verstellbar zwischen einer kreisringförmigen ersten Dichtfläche 54 und einer kreisringförmigen zweiten Dichtfläche 55 der Ringausnehmung 24 aufgenommen ist. Die Durchmesser der beiden ringförmigen Führungsplatten 26, 27, der Führungsscheibe 25 und der Ringausnehmung 24 sind so aufeinander abgestimmt, daß die aufgrund der Abwinklung erforderliche Verstellung der Führungsscheibe 25 in der Ringausnehmung 24 ausgeführt werden kann, andererseits jedoch diese sicher gehalten ist. Dementsprechend ist der größte Durchmesser der Ringausnehmung 24 größer als der Außendurchmesser der beiden ringförmigen Führungsplatten 26, 27 und größer als der Außendurchmesser der Führungsscheibe 25. Der Innendurchmesser der beiden ringförmigen Führungsplatten 26,. 27 ist jedoch kleiner als der Außendurchmesser der Führungsscheibe 25. Die Führungsscheibe 25 weist des weiteren einen zentralen ersten Zentrieransatz 28 und einen zweiten Zentrieransatz 29 auf, in denen eine zylindrische Lagerbohrung 30 mit einer Längsachse 31 vorhanden ist. Der erste Zentrieransatz 28 steht über eine erste Führungsfläche 32 und der zweite Zentrieransatz 29 über eine zweite Führungsfläche 33 der Führungsscheibe 25 vor. Aus diesem Grunde ist der kleinste Durchmesser der Ringausnehmung 24 größer als der Außendurchmesser der Führungsansätze 28, 29. Ferner muß entsprechend auch der Innendurchmesser der ringförmigen Führungsplatten 26, 27 ebenfalls größer bemessen sein als der Außendurchmesser der Führungsansätze 28, 29. Auf der ersten Lagerkugel 6 sitzt ein erster Lagerring 34, dessen hohlkugelige Bohrung an die kugelige Außenfläche 7 der ersten Lagerkugel 6 angepasst ist. Der erste Lagerring 34 ist außen zylindrisch gestaltet und in der Lagerbohrung 30 verschiebbar geführt. Entsprechend ist die zweite Lagerkugel 17 mit ihrer kugeligen Außenfläche 18 in einer entsprechenden hohlkugeligen Bohrung eines zweiten Lagerringes 35 aufgenommen. Der zweite Lagerring 35 ist ebenfalls in der Lagerbohrung 30 mit seiner zylindrischen Außenfläche verschiebbar aufgenommen.

Die beiden Zapfenkreuze 10, 21 weisen jeweils 4 Zapfen 36 auf, von denen jeweils zwei auf einer gemeinsamen Zapfenachse 37, 38 angeordnet sind. Die Zapfen 36 sind mittels der Wälzlager 11, 22 in Bohrungen 39 der Gabelarme 2, 13, 40, 41 gelagert. Die Wälzlager 11, 22 umfassen jeweils eine Lagerbüchse 42, welche in der jeweiligen Bohrung 39 einsitzt, sowie Wälzkörper 43, die auf einer Außenfläche des jeweiligen Zapfens 36 und einer Innenfläche der jeweiligen Lagerbüchse 42 abwälzen.

Das erste Zapfenkreuz 10 weist zur Schmierung der Wälzlager 11 einen ersten Schmiermittelkanal 44 auf, der eine Bohrung 45 umfasst, welche längs der Zapfenachse 37 zweier der Zapfen 36 verläuft. Ferner umfasst der erste Schmiermittelkanal 44 eine Bohrung 46, welche entlang der anderen Zapfenachse 38 verläuft. Die Bohrungen 45, 46 gehen jeweils von der Stirnfläche eines Zapfens 36 aus und enden in einer Stirnfläche des entfernt angeordneten Zapfens 36 und schneiden sich im Zentrum des Zapfenkreuzes 10. Einer der Zapfen 36 weist einen Schmiernippel 47 auf, der mit dem ersten Schmiermittelkanal 44 eine erste Schmiermittelversorgung bildet.

Diejenige Lagerbüchse 42 des Zapfens 36 des ersten Zapfenkreuzes 10, der mit einem Schmiernippel 47 verbunden ist, weist eine radial zur jeweiligen Zapfenachse 37 verlaufende Durchgangsbohrung 56 auf. Diese verbindet den zu schmierenden Raum der Wälzlager 43 mit einer ersten Schmiermittelführung 57. Die erste Schmiermittelführung 57 führt zu einer ersten Schmiernut 58, welche koaxial zur Längsachse 31 in der ersten Dichtfläche 54 vorgesehen ist. Somit lässt sich Schmiermittel vom Schmiernippel 47 des ersten Zapfenkreuzes 10 bis zur ersten Schmiernut 58 befördern, wo die Führung der ersten Führungsplatte 26 geschmiert wird. Das Schmiermittel wird direkt zwischen die erste Dichtfläche 54 und die mit dieser in Anlage befindliche Fläche der ersten Führungsplatte 26 eingebracht. Da die erste Schmiernut 58 nahe dem kleinsten Durchmesser der Ringausnehmung 24 angeordnet ist, wird die erste Führungsplatte 26 bei einer Radialverstellung innerhalb der Ringausnehmung 24 über einen großen radialen Bereich geschmiert.

Entsprechend weist die zweite Dichtfläche 55 eine zweite Schmiernut 59 auf, welche spiegelbildlich zur ersten Schmiernut 58 angeordnet ist und die über eine zweite Schmiermittelführung 60 mit einer Lagerbüchse 42' des zweiten Zapfenkreuzes 21 verbunden ist.

Der zweite Lagergehäuseabschnitt 20 weist eine Umfangsnut 61 auf, in die eine Schutzvorrichtung drehend aufgenommen werden kann, wobei die Schutzvorrichtung als Berührungsschutz vor drehenden Teilen des Doppelkreuzgelenkes dienen soll. Die Umfangsnut ist ausgehend von ihrem Grund über eine Bohrung 62 mit der zweiten Schmiernut 59 verbunden. Somit ist die Umfangsnut 61 in den Schmiermittelverbund der zweiten Schmiernut 59 und dem zweiten Schmiermittelkanal 44' des zweiten Zapfenkreuzes 21 integriert.

Senkrecht zu der Ebene, die durch die beiden Zapfenachsen 37, 38 aufgespannt ist, weist das erste Zapfenkreuz 10 eine weitere Bohrung 48 auf, die zum ersten Schmiermittelkanal 44 führt und in die ein flexibler Schlauch 49 eingesetzt ist, der zu dem Schmiermittelkanal 50 in Form einer Durchgangsbohrung des ersten Lagerzapfens 4 führt und in diese eingesteckt ist. Der Schmiermittelkanal 50 mündet in die Lagerbohrung 30.

In der Führungsscheibe 25 sind Schmiermittelkanäle 51 in Form von Radialbohrungen vorgesehen, die von der Lagerbohrung 30 in die Ringausnehmung 24 führen. Nahe einer äußeren Umfangsfläche 52 der Führungsscheibe 25, welche durch die Führungsflächen 32, 33 begrenzt ist, sind Durchgangsbohrungen 53 vorgesehen, die einen weiteren Teil des Schmiermittelkanals 51 bilden und achsparallel zur Längsachse verlaufen sowie jeweils eine Radialbohrung des jeweiligen Schmiermittelkanals 51 schneiden. Die Durchgangsbohrungen 53 führen somit jeweils von der ersten Führungsfläche 32 zur zweiten Führungsfläche 33. Somit sind die Führungsflächen 32, 33 direkt geschmiert, wobei das Schmiermittel zwischen die Führungsflächen 32, 33 und die jeweilige Oberfläche der Führungsplatten 26, 27 gelangt. Die Durchgangbohrung 53 ist hierbei. auf einem Durchmesser um die Längsachse angeordnet, der gewährleistet, dass die Durchgangsbohrungen 53 in jeder Winkelposition der beiden Gelenke von den Führungsplatten 26, 27 verschlossen sind.

Das zweite Zapfenkreuz 21 ist identisch zum ersten Zapfenkreuz 10 aufgebaut und mit gleichen Bezugszeichen versehen.

Ebenso ist es möglich, dass die Führungsscheibe ohne Zwischenschaltung von Führungsplatten in einer Ringausnehmung gelagert ist, wobei das Schmiermittel in diesem Fall durch die Durchgangsbohrungen zwischen die Dichtflächen und Gleitflächen der Ringausnehmung geführt wird.

### Bezugszeichenliste

- 1: erste äußere Gelenkgabel
- 2: erster äußerer Gabelarm
- 3: erste Brücke
- 4: erster Lagerzapfen
- 5: erste Achse
- 6: erste Lagerkugel
- 7: kugelige Außenfläche
- 8: erste innere Gelenkgabel
- 9: erster Lagergehäuseabschnitt
- 10: erstes Zapfenkreuz
- 11: Wälzlager
- 12: zweite äußere Gelenkgabel
- 13: zweite äußere Gabelarme
- 14: zweite Brücke
- 15: zweiter Lagerzapfen
- 16: zweite Achse
- 17: zweite Lagerkugel
- 18: kugelige Außenfläche
- 19: zweite innere Gelenkgabel
- 20: zweiter Lagergehäuseabschnitt
- 21: zweites Zapfenkreuz
- 22: Wälzlager
- 23: Schraube
- 24: Ringausnehmung
- 25: Führungsscheibe
- 26: erste Führungsplatte
- 27: zweite Führungsplatte
- 28: erster Zentrieransatz
- 29: zweiter Zentrieransatz
- 30: Lagerbohrung
- 31: Längsachse
- 32: erste Führungsfläche
- 33: zweite Führungsfläche
- 34: erster Lagerring
- 35: zweiter Lagerring
- 36, 36': Zapfen
- 37, 37': Zapfenachse
- 38, 38': Zapfenachse
- 39, 39': Bohrung
- 40: erster innerer Gabelarm
- 41: zweiter innerer Gabelarm
- 42, 42': Lagerbüchse
- 43, 43': Wälzkörper
- 44, 44': Schmiermittelkanal
- 45, 45': Bohrung
- 46, 46': Bohrung
- 47, 47': Schmiermittel
- 48: Bohrung
- 49: Schlauch
- 50: Schmiermittelkanal
- 51: Schmiermittelkanal
- 52: Umfangsfläche
- 53: Durchgangsbohrung
- 54: erste Dichtfläche
- 55: zweite Dichtfläche
- 56, 56': Durchgangsbohrung
- 57: erste Schmiermittelführung
- 58: erste Schmiernut
- 59: zweite Schmiernut
- 60: zweite Schmiermittelführung
- 61: Umfangsnut
- 62: Bohrung

## Patentansprüche

1. Zentriertes Doppelkreuzgelenk umfassend
- eine erste äußere Gelenkgabel (1) mit ersten äußeren Gabelarmen (2),
- eine erste Brücke (3), mittels der die ersten äußeren Gabelarme (2) miteinander verbunden sind,
- erste Zentriermittel (4, 6), die der ersten Brücke (3) zugeordnet sind,
- eine erste innere Gelenkgabel (8) mit ersten inneren Gabelarmen,
- ein erstes Zapfenkreuz (10), welches die ersten äußeren Gabelarme (2) mittels Wälzlager (11) mit den ersten inneren Gabelarmen gelenkig verbindet und welches eine erste Schmiermittelversorgung (44, 47) zum Schmieren der Wälzlager (11) aufweist,
- eine zweite äußere Gelenkgabel (12) mit zweiten äußeren Gabelarmen (13),
- eine zweite Brücke (14), mittels der die zweiten äußeren Gabelarme (13) miteinander verbunden sind,
- zweite Zentriermittel (15, 17), die der zweiten Brücke (14) zugeordnet sind,
- eine zweite innere Gelenkgabel (19) mit zweiten inneren Gabelarmen,
- ein zweites Zapfenkreuz (21), welches die zweiten äußeren Gabelarme (13) mittels Wälzlager (22) mit den zweiten inneren Gabelarmen gelenkig verbindet und welches eine zweite Schmiermittelversorgung (44', 47') zum Schmieren der Wälzlager (22) aufweist,
- eine Führungsscheibe (25) mit einer Längsachse (31), mit einem ersten zentralen Zentrieransatz (28), der gelenkig mit den ersten Zentriermitteln (4, 6) der ersten äußeren Gelenkgabel (1) verbunden ist, mit einem zweiten zentralen Zentrieransatz (29), der gelenkig mit den zweiten Zentriermitteln (15, 17) der zweiten äußeren Gelenkgabel (12) verbunden ist, und mit Führungsflächen (32, 33), über die die Führungsscheibe (25) in einer Ringausnehmung(24) eines Gehäuses (9, 20) geführt ist, wobei die Ringausnehmung (24) durch eine erste radial verlaufende kreisringförmige Dichtfläche (54) und durch eine zweite radial verlaufende kreisringförmige Dichtflächen (55) begrenzt ist, relativ zu denen die Führungsflächen (32, 33) der Führungsscheibe (25) radial verschiebbar geführt sind und wobei die Ringausnehmung (24) radial außen geschlossen und radial innen offen ist,
- wobei die erste innere Gelenkgabel (1) und die zweite innere Gelenkgabel (19) Teil des Gehäuses (9, 20) sind,
**gekennzeichnet durch**
- eine erste Schmiernut (58) in der ersten Dichtfläche, die koaxial zur Längsachse (31) der Führungsscheibe (25) verläuft, nahe dem inneren Durchmesser der Ringausnehmung (24) angeordnet ist und mit der ersten Schmiermittelversorgung (44, 47) des ersten Zapfenkreuzes (10) verbunden ist, und
- eine zweite Schmiernut (59) in der zweiten Dichtfläche (55), die koaxial zur Längsachse (31) der Führungsscheibe (25) verläuft, nahe dem inneren Durchmesser der Ringausnehmung (24) angeordnet ist und mit der zweiten Schmiermittelversorgung (44', 47') des zweiten Zapfenkreuzes (21) verbunden ist.

2. Zentriertes Doppelkreuzgelenk nach Anspruch 1
**dadurch gekennzeichnet,**
**daß** beidseitig der Führungsscheibe (25) ringförmige Führungsplatten (26, 27) in der Ringausnehmung (24) angeordnet sind,
**daß** der Außendurchmesser der Führungsplatten (26, 27) größer als der innere Durchmesser der Ringausnehmung (24) ist und kleiner als der größte Durchmesser der Ringausnehmung (24) ist und
**daß** der Innendurchmesser der Führungsplatten (26, 27) größer als der äußere Durchmesser der Führungsansätze (28, 29) der Führungsscheibe (25) ist und kleiner als der Außendurchmesser der Führungsscheibe (25) ist.

3. Zentriertes Doppelkreuzgelenk nach einem der Ansprüche 1 oder 2,
**dadurch gekennzeichnet,**
**daß** in dem Gehäuse (9, 20) eine erste Schmiermittelführung (57) vorgesehen ist, die die erste Schmiermittelversorgung (44, 47) des ersten Zapfenkreuzes (10) mit der ersten Schmiernut (58) verbindet und
**daß** in dem Gehäuse (9, 20) eine zweite Schmiermittelführung (60) vorgesehen ist, die die zweite Schmiermittelversorgung (44', 47') des zweiten Zapfenkreuzes (21) mit der zweiten Schmiernut (59) verbindet.

4. Zentriertes Doppelkreuzgelenk nach einem der Ansprüche 1 bis 3,
**dadurch gekennzeichnet,**
**daß** das Gehäuse (20) eine Umfangsnut (61) zur drehenden Aufnahme einer Schutzvorrichtung aufweist, die koaxial zur Längsachse (31) verläuft und die mit einer der Schmiernuten (59) verbunden ist.

5. Zentriertes Doppelkreuzgelenk nach einem der Ansprüche 1 bis 4,
**dadurch gekennzeichnet,**
**daß** in der Führungsscheibe (25) eine zylindrische Lagerbohrung (30) vorgesehen ist, die koaxial zur Längsachse (31) durch den ersten Zentrieransatz (28) und den zweiten Zentrieransatz (29) führt,
**daß** die ersten Zentriermittel und die zweiten Zentriermittel jeweils einen Lagerzapfen (4, 15) aufweisen, welcher sich koaxial zu einer Drehachse (5, 16) der jeweiligen äußeren Gelenkgabel (1, 19) erstreckt,
**daß** je Lagerzapfen (4, 15) eine Lagerkugel (6, 17) in Form einer Kugelschicht mit einer Durchgangsbohrung, mit der sie auf dem Lagerzapfen (4, 15) aufsitzt und zumindest axial bezüglich der Drehachse (5, 16) gehalten ist und die eine kugelige Außenfläche (7, 18) aufweist, vorgesehen ist, und
**daß** je Lagerkugel (6, 17) ein Lagerring (34, 35), der die Außenfläche (7, 18) der Lagerkugel (6, 17) in einer entsprechenden hohlkugeligen Bohrung allseitig schwenkbeweglich lagert und eine zylindrische Außenfläche bildet, mit der dieser in der zylindrischen Lagerbohrung (30) der Führungsscheibe (25) axial verstellbar einsitzt, vorgesehen ist.

## Claims

1. Centred double universal joint comprising
- a first outer joint yoke (1) with first outer yoke arms (2),
- a first bridge (3), by means of which the first outer yoke arms (2) are connected to each other,
- first centring means (4, 6), which are arranged to the first bridge (3),
- a first inner joint yoke (8) with first inner yoke arms,
- a first journal cross (10), which connects articulatably the first outer yoke arms (2) by rolling member bearings (11) to the first inner yoke arms and which has a first lubricant supply (44, 47) for lubricating the rolling member bearings (11),
- a second outer joint yoke (12) with second outer yoke arms (13),
- a second bridge (14), by means of which the second outer yoke arms (13) are connected to each other,
- second centring means (15, 17), which are arranged to the second bridge (14),
- a second inner joint yoke (19) with two second inner yoke arms,
- a second journal cross (21), which connects articulatably the second outer yoke arms (13) by rolling member bearings (22) to the second inner yoke arms and which has a second lubricant supply (44', 47') for lubricating the rolling member bearings (22),
- a guide disc (26) with a longitudinal axis (31), having a first central centring projection (28), which is connected articulatably to the first centring means (4, 6) of the first outer joint yoke (1), a second central centring projection (29), which is connected articulatably to the second centring means (15, 17) of the second outer joint yoke (12), and having guide faces (32, 33), by which the guide disc (25) is guided in an annular recess (24) of a housing (9, 20), wherein the annular recess (24) is delimited by a first radially extending circular annular sealing face (54) and by a second radially extending circular annular sealing face (55), relative to which the guide faces (32, 33) of the guide disc (25) are radially displaceably guided and wherein the annular recess (24) is closed radially to the outside and is open radially to the inside,
- wherein the first inner joint yoke (1) and the second inner joint yoke (19) form part of the housing (9, 20),
**characterised in that**
- a first lubrication groove (58) in the first sealing face, which extends coaxially to the longitudinal axis (31) of the guide disc (25), is arranged close to the inner diameter of the annular recess (24) and is connected to the first lubricant supply (44, 47) of the first journal cross (10), and
- a second lubrication groove (59) in the second sealing face (55), extending coaxially to the longitudinal axis (31) of the guide disc (25), is arranged close to the inner diameter of the annular recess (24) and is connected to the second lubricant supply (44', 47') of the second journal cross (21).

2. Centred double universal joint according to claim 1,
**characterised in that**
at both sides of the guide disc (25) ring-like guide plates (26, 27) are arranged in the annular recess (24),
the outer diameter of the guide plates (26, 27) is larger than the inner diameter of the annular recess (24) and smaller than the largest diameter of the annular recess (24) and
the inner diameter of the guide plates (26, 27) is larger than the outer diameter of the guide projections (28, 29) of the guide disc (25) and smaller than the outer diameter of the guide disc (25).

3. Centred double universal joint according to one of claims 1 or 2,
**characterised in that**
in the housing (9, 20) a first lubricant guide (57) is provided, which connects the first lubricant supply (44, 47) of the first journal cross (10) to the first lubricating groove (58) and
in the housing (9, 20) a second lubricant guide (60) is provided, which connects the second lubricant supply (44', 47') of the second journal cross (21) to the second lubricating groove (59).

4. Centred double universal joint according to one of claims 1 to 3,
**characterised in that**
the housing (20) has a circumferential groove (61) for the rotational accommodation of a protection device, which extends coaxially to the longitudinal axis (31) and is connected to one of the lubricating grooves (59).

5. Centred double universal joint according to one of claims 1 to 4,
**characterised in that**
in the guide disc (25) a cylindrical bearing bore (30) is provided, which extends coaxially to the longitudinal axis (31) through the first centring projection (28) and the second centring projection (29),
the first centring means and the second centring means have, respectively, a bearing journal (4, 15), which extends coaxially to a rotational axis (5, 16) of the corresponding outer joint yoke (1, 19),
for each bearing journal (4, 15) a bearing ball (6, 17) is provided in form of a spherical ring with a through bore, with which it rests on the bearing journal (4, 15) and which is at least held axially in reference to the rotational axis (5, 16) and which has a spherical outer face (7, 18), and
for each bearing ball (6, 17) a bearing ring (34, 35) is provided, which supports universally pivotably the outer face (7, 18) of the bearing ball (6, 17) in a corresponding hollow-spherical bore and forms a cylindrical outer face, with which the same rests axially displaceably in the cylindrical bearing bore (30) of the guide disc (25).

## Revendications

1. Joint universel double centré comprenant
- une première chape articulée extérieure (1) avec des premiers bras de chape extérieurs (2),
- un premier pont (3) à l'aide duquel les premiers bras de chape extérieurs (2) sont reliés les uns aux autres,
- des premiers moyens de centrage (4, 6) qui sont associés au premier pont (3),
- une première chape articulée intérieure (8) avec des premiers bras de chape intérieurs,
- un premier croisillon à tenon (10) qui relie de manière articulée les premiers bras de chape extérieurs (2) aux premiers bras de chape intérieurs à l'aide de paliers à roulement (11) et qui comporte une première alimentation de lubrifiant (44, 47) pour la lubrification des paliers à roulement (11),
- une seconde chape articulée extérieure (12) avec des seconds bras de chape extérieurs (13),
- un second pont (14) à l'aide duquel les seconds bras de chape extérieurs (13) sont reliés les uns aux autres,
- des seconds moyens de centrage (15, 17) qui sont associés au second pont (14),
- une seconde chape articulée intérieure (19) avec des seconds bras de chape intérieurs,
- un second croisillon à tenon (21) qui relie de manière articulée les seconds bras de chape extérieurs (13) aux seconds bras de chape intérieurs à l'aide de paliers à roulement (22) et qui comporte une seconde alimentation de lubrifiant (44', 47') pour la lubrification des paliers à roulement (22),
- un disque de guidage (25) avec un axe longitudinal (31), avec un premier rebord de centrage central (28) qui est relié de manière articulée aux premiers moyens de centrage (4, 6) de la première chape articulée extérieure (1), avec un second rebord de centrage central (29) qui est relié de manière articulée aux seconds moyens de centrage (15, 17) de la seconde chape articulée extérieure (12), et avec des surfaces de guidage (32, 33) au moyen desquelles le disque de guidage (25) est guidé dans un creux annulaire (24) d'un boîtier (9, 20), le creux annulaire (24) étant limité par une première surface d'étanchéité (54) en forme d'anneau de cercle s'étendant radialement et par une seconde surface d'étanchéité (55) en forme d'anneau de cercle s'étendant radialement par rapport auxquelles les surfaces de guidage (32, 33) du disque de guidage (25) sont guidées de manière déplaçable radialement et le creux annulaire (24) étant fermé radialement à l'extérieur et ouvert radialement à l'intérieur,
- la première chape articulée intérieure (1) et la seconde chape articulée intérieure (19) faisant partie du boîtier (9, 20),
**caractérisé par**
- une première rainure de lubrification (58) dans la première surface d'étanchéité qui s'étend coaxialement à l'axe longitudinal (31) du disque de guidage (25), qui est disposée près du diamètre intérieur du creux annulaire (24) et qui est raccordée à la première alimentation de lubrifiant (44, 47) du premier croisillon à tenon (10), et
- une seconde rainure de lubrification (59) dans la seconde surface d'étanchéité (55) qui s'étend coaxialement à l'axe longitudinal (31) du disque de guidage (25), qui est disposée près du diamètre intérieur du creux annulaire (24) et qui est raccordée à la seconde alimentation de lubrifiant (44', 47') du second croisillon à tenon (21).

2. Joint universel double centré selon la revendication 1,
**caractérisé en ce que**
des plaques de guidage annulaires (26, 27) sont disposées dans le creux annulaire (24) de chaque côté du disque de guidage (25),
le diamètre extérieur des plaques de guidage (26, 27) est plus grand que le diamètre intérieur du creux annulaire (24) et plus petit que le plus grand diamètre du creux annulaire (24) et
le diamètre intérieur des plaques de guidage (26, 27) est plus grand que le diamètre extérieur des épaulements de guidage (28, 29) du disque de guidage (25) et plus petit que le diamètre extérieur du disque de guidage (25).

3. Joint universel double centré selon l'une quelconque des revendications 1 ou 2,
**caractérisé en ce**
**qu'**il est prévu dans le boîtier (9, 20) un premier guidage de lubrifiants (57) qui relie la première alimentation de lubrifiant (44, 47) du premier croisillon à tenon (10) à la première rainure de lubrification (58) et
**qu'**il est prévu dans le boîtier (9, 20) un second guidage de lubrifiants (60) qui relie la seconde alimentation de lubrifiant (44', 47') du second croisillon à tenon (21) à la seconde rainure de lubrification (59).

4. Joint universel double centré selon l'une quelconque des revendications 1 à 3,
**caractérisé en ce que**
le boîtier (20) comporte une rainure périphérique (61) pour le logement rotatif d'un dispositif de protection qui s'étend coaxialement à l'axe longitudinal (31) et qui est reliée à l'une des rainures de lubrification (59).

5. Joint universel double centré selon l'une quelconque des revendications 1 à 4,
**caractérisé en ce que**
un alésage de roulement cylindrique (30) qui traverse le premier rebord de centrage (28) et le second rebord de centrage (29) coaxialement à l'axe longitudinal (31), est prévu dans le disque de guidage (25),
les premiers moyens de centrage et les seconds moyens de centrage comportent chacun un tourillon (4, 15) qui s'étend coaxialement à un pivot (5, 16) des chapes articulées extérieures respectives (1, 19),
pour chaque tourillon (4, 15), il est prévu un roulement de palier (6, 17) sous forme d'un segment sphérique à deux bases avec un alésage de passage, avec lequel il est posé sur le tourillon (4, 15) et maintenu au moins axialement par rapport au pivot (5, 16), et qui comporte une surface extérieure sphérique (7, 18), et
pour chaque roulement de palier (6, 17), il est prévu une bague de roulement (34, 35) dans laquelle est logée, de manière à pivoter de tous les côtés, la surface extérieure (7, 18) du roulement de palier (6, 17) dans un alésage correspondant en forme de sphère creuse et qui forme une surface extérieure cylindrique avec laquelle celle-ci est posée, de manière mobile axialement, dans l'alésage de roulement cylindrique (30) du disque de guidage (25).
